# EUROPEAN PATENT APPLICATION

(11) **EP 1 857 336 A1**
(43) Date of publication of application: **21.11.2007**
(21) Application number: 06114054.7
(22) Date of filing: 16.05.2006
(51) Int. Cl.: B60S 1/38

(54) **A windscreen wiper device**

(71) Applicant: Federal-Mogul S.A., 6790 Aubange (BE)
(72) Inventor: Boland, Xavier, 6700 Arlon (BE)
(74) Representative: Hooiveld, Arjen Jan Winfried

(57) **Abstract**

A windscreen wiper device (1) comprising an elastic, elongated carrier element, as well as an elongated wiper blade (2) of a flexible material, which can be placed in abutment with a windscreen to be wiped, which wiper blade (2) includes opposing longitudinal grooves (9) on its longitudinal sides, in which grooves (9) spaced-apart longitudinal strips (10) of the carrier element are disposed, wherein neighbouring ends (11) of said longitudinal strips (10) are interconnected by a respective connecting piece (12), which windscreen wiper device (1) comprises a connecting device (3) for an oscillating arm (4), wherein said oscillating arm (4) is pivotally connected to said connecting device (3) about a pivot axis near one end, with the special feature that at least one longitudinal strip (10) is provided with a plurality of holes (13) over a portion of its length, so that a constant force is applied on said windscreen by outer ends of said wiper blade (2), independent of the curvature of said windscreen.

## Description

The present invention relates to a windscreen wiper device comprising an elastic, elongated carrier element, as well as an elongated wiper blade of a flexible material, which can be placed in abutment with a windscreen to be wiped, which wiper blade includes opposing longitudinal grooves on its longitudinal sides, in which grooves spaced-apart longitudinal strips of the carrier element are disposed, wherein neighbouring ends of said longitudinal strips are interconnected by a respective connecting piece, which windscreen wiper device comprises a connecting device for an oscillating arm, wherein said oscillating arm is pivotally connected to said connecting device about a pivot axis near one end. The invention also relates to a longitudinal strip as such. Such a longitudinal strip is also called a "flexor", a "backing strip" or a "vertebra".

Such a windscreen wiper device is known from German patent publication no. 101 30 903 (Robert Bosch GmbH), for example. The prior art windscreen wiper device is designed as a "yokeless" wiper device, wherein no use is made of several yokes pivotally connected to each other, but wherein the wiper blade is biassed by the longitudinal strips, as a result of which it exhibits a specific curvature.

A disadvantage of the windscreen wiper device known from the above-mentioned German patent document is the following. The oscillating arm of this prior art windscreen wiper device is pivotally connected to a mounting head fixed for rotation to a shaft driven by a small motor. In use, the shaft rotates alternately in a clockwise and in a counter-clockwise sense carrying the mounting head into rotation also, which in turn draws the oscillating arm into rotation and by means of the connecting device moves the wiper blade. A spring is hooked with its first end on the mounting head and with its second end on the oscillating arm in order to ensure that the oscillating arm and thus the wiper blade connected thereto is pressed onto the windscreen to be wiped. However, in practice it appears that the oscillating arm does not press the wiper blade with enough force and/or a constant force (measured along the length of the wiper blade), that is an even pressure onto the windscreen to be wiped, with all negative consequences involved as far as the wiping qualities are concerned.

It is the objective of the present invention to obviate these disadvantages of the prior art, particularly to obtain a windscreen wiper device which has excellent wiping properties, also when a windscreen to be wiped shows a large curvature.

In order to accomplish that objective a windscreen wiper device of the type mentioned in the introduction to the description according to the invention is characterized in that at least one longitudinal strip is provided with a pluralty of holes over a portion of its length, so that a constant force is applied on said windscreen by outer ends of said wiper blade, independent of the curvature of said windscreen. In other words, said plurality of said holes ensures that said wiper blade has a varying rigidity along its length, so that said wiper blade is more compatible with variations in screencurvature during wiping. Accordingly, said wiper blade is deformable from an original position when it is not placed against the windscreen to be wiped (for example, when it is packaged in a package, holder or container) into a working position when it is placed against the windscreen to be wiped, and vice versa, in such a manner that
- in the original position the wiper blade exhibits a shape with a predetermined curcature, whereas
- in the working position the wiper blade has a curvature corresponding to the curvature of the windscreen to be wiped, while a constant force is applied on said windscreen by the outer ends of said wiper blade, independent of the specific curvature of said windscreen.

As a specific curvature, for example a large curvature, of the windscreen to be wiped does not negatively influence the wiping qualities of the wiper blade involved, the present wiper blade can be used on almost every type of windscreen. Particularly, both longitudinal strips are equipped with a plurality of said holes.

Preferably, a more constant force is applied on said windscreen along the entire length of said wiper blade, that is from one outer end to the other outer end of the wiper blade.

In a preferred embodiment of a windscreen wiper device in accordance with the invention said holes have a closed circumference. In the alternative, said holes have a non-closed circumference.

In another preferred embodiment of a windscreen wiper device according to the invention said holes comprise an opening at the interior longitudinal side of said longitudinal strip. In the alternative, said holes comprise an opening at the exterior longitudinal side of said longitudinal strip.

In another preferred embodiment of a windscreen wiper device in accordance with the invention said holes have a round shape, such as a circular or elliptical shape, or a rectangular shape, such as a square shape. Said holes are preferably made through a stamping operation, so that said holes are made in a controllable and reliable manner. In the alternative, said holes are made through a cutting or sawing operation.

In another preferred embodiment of a windscreen wiper device according to the invention said portion of the length of said longitudinal strip is located near an end thereof. Particularly, the size of the holes varies along said portion of the length of said longitudinal strip. More in particular, the distance between adjacent holes may vary along said portion of the length of said longitudinal strip.

As mentioned earlier, the present invention also refers to a longitudinal strip provided with a pluralty of holes over a portion of its length, so that a constant force is applied on said windscreen by outer ends of said wiper blade, independent of the curvature of said windscreen.

The above and further aspects of the present invention will now be further explained in more detail with reference to figures illustrated in a drawing, wherein:
- Figure 1 is a perspective, schematic view of a preferred embodiment of a windscreen wiper device according to he invention; and

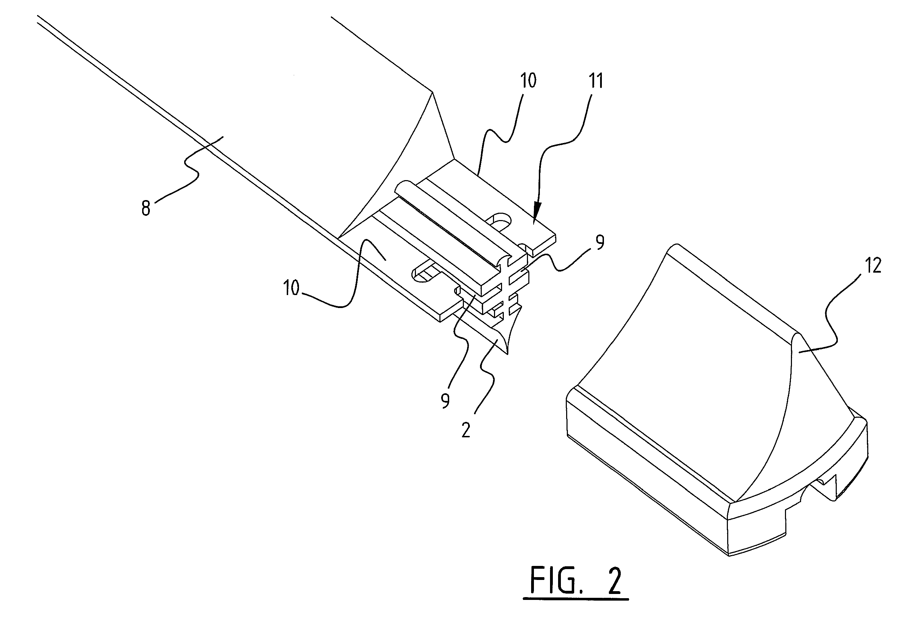

- Figure 2 is a detail of a windscreen wiper device of figure 1; and
- Figure 3 is a perspective, schematic view of a preferred embodiment of alongitudinal strip as used in the windscreen wiper device of figure 1.

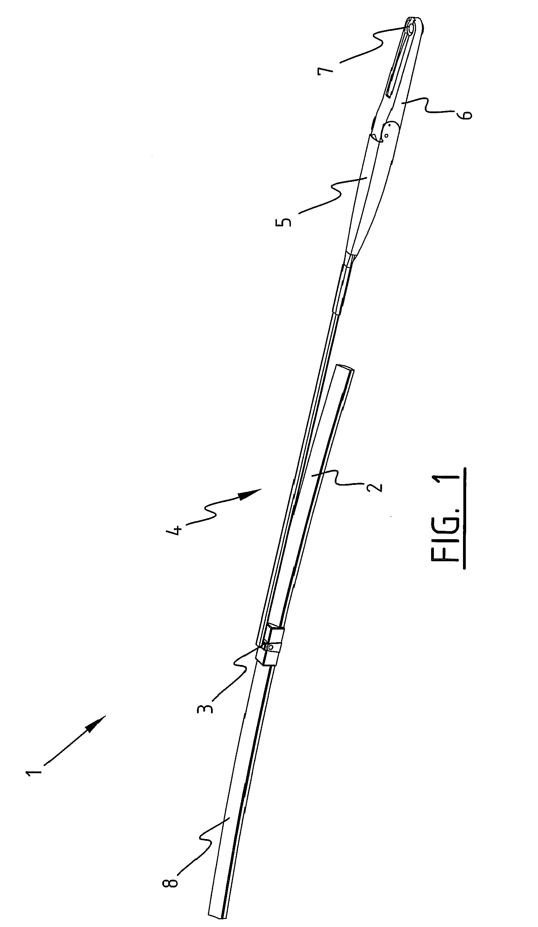

Figure 1 shows a preferred variant of a windscreen wiper device 1 according to the invention. Said windscreen wiper device is built up of a wiper blade 2, as well as of a connecting device 3 of plastic material for an oscillating arm 4. The oscillating arm 4 comprises a arm member 5 pivotally connected to a mounting head 6 fixed for rotation to a shaft 7 driven by a small motor (not shown). In use, the shaft 7 rotates alternately in a clockwise and in a counter-clockwise sense carrying the mounting head 6 into rotation also, which in turn draws the oscillating arm 4 into rotation and by means of the connecting device 3 moves the wiper blade 2. A spring (not shown) is hooked with its first end on the mounting head 6 and with its second end on the arm member 5 in order to ensure that the oscillating arm 4 and thus the wiper blade 2 connected thereto is pressed onto a windscreen to be wiped. A spoiler 8 extending along the entire length of the wiper blade 2 is detachably connected thereto.

Said windscreen wiper device is built up of said elastomeric wiper blade 2, in the longitudinal sides of which opposing longitudinal grooves 9 are formed, and of longitudinal strips 10 made spring band steel, which are fitted in said longitudinal grooves 9. Said strips 10 form a carrier element for the rubber wiper blade 2, as it were, which is thus biased in a curved position (the curvature in operative position being that of a windscreen to be wiped). Neighbouring ends 11 of strips 10 are interconnected on either side of the windscreen wiper device 1 by means of connecting pieces 12 functioning as clamping members. In this embodiment, the connecting pieces 12 are separate constructional elements, which may be form-locked ("positive locking" or "having positive fit") as well as force-locked to the ends 11 of strips 10. In another preferred variant, said connecting pieces 12 are in one piece with the strips 10. In the latter case said connecting pieces form transverse bridges for the strips 10, as it were.

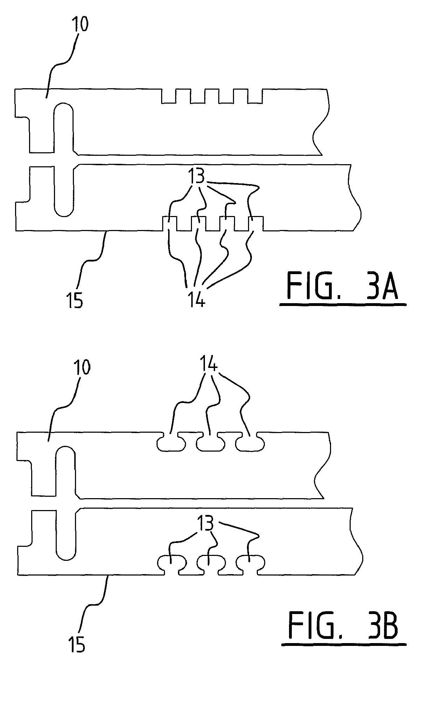

With reference to figure 3 a longitudinal strip 10 as used in the windscreen wiper device of figure 1, wherein said strip 10 is equipped with stamped holes 13 with an non-closed circumference, that is comprising an opening 14 at the exterior longitudinal side 15 of said longitudinal strip 10. In the alternative they have a closed circumference. Said holes 13 have an elliptical or rectangular shape. That means that the wiper blade 2 is able to follow better any curvature of a windscreen to be wiped, while the oscillating arm 4 exerts a constant pressure measured along the entire length of the wiper blade on the windscreen to be wiped.

The scope of protection conferred by the present invention is not restricted to the embodiment shown in the figures, but also extends to other embodiments falling within the scope of the appended claims. For example, a skilled person would easily understand that the present invention is not necessarily restricted to the use of two longitudinal strips, but may also be applied to only one longitudinal strip, while in some cases holes may be provided along the entire length of said longitudinal strip(s).

## Claims

1. A windscreen wiper device (1) comprising an elastic, elongated carrier element, as well as an elongated wiper blade (2) of a flexible material, which can be placed in abutment with a windscreen to be wiped, which wiper blade (2) includes opposing longitudinal grooves (9) on its longitudinal sides, in which grooves (9) spaced-apart longitudinal strips (10) of the carrier element are disposed, wherein neighbouring ends (11) of said longitudinal strips (10) are interconnected by a respective connecting piece (12), which windscreen wiper device (1) comprises a connecting device (3) for an oscillating arm (4), wherein said oscillating arm (4) is pivotally connected to said connecting device (3) about a pivot axis near one end, **characterized in that** at least one longitudinal strip (10) is provided with a plurality of holes (13) over a portion of its length, so that a constant force is applied on said windscreen by outer ends of said wiper blade (2), independent of the curvature of said windscreen.

2. A windscreen wiper device (1) according to claim 1, wherein said at least one longitudinal strip (10) is provided with a plurality of holes (13) over a portion of its length, so that a constant force is applied on said windscreen along the entire length of said wiper blade (2), independent of the curvature of said windscreen.

3. A windscreen wiper device (1) according to claim 1 or 2, wherein said holes (13) have a closed circumference.

4. A windscreen wiper device (1) according to claim 1 or 2, wherein said holes (13) have a non-closed circumference.

5. A windscreen wiper device (1) according to claim 4, wherein said holes (13) comprise an opening (14) at the interior longitudinal side of said longitudinal strip (10).

6. A windscreen wiper device (1) according to claim 4, wherein said holes (13) comprise an opening (14) at the exterior longitudinal side (15) of said longitudinal strip (10).

7. A windscreen wiper device (1) according to any of the preceding claims 1 through 6, wherein said holes (13) have a round or a rectangular shape.

8. A windscreen wiper device (1) according to any of the preceding claims 1 through 7, wherein said holes (13) are stamped.

9. A windscreen wiper device (1) according to any of the preceding claims 1 through 8, wherein said portion of the length of said longitudinal strip (10) is located near an end thereof.

10. A windscreen wiper device (1) according to claim 9, wherein the size of said holes (13) varies along said portion of the length of said longitudinal strip (10).

11. Longitudinal strip (10) as defined in a windscreen wiper device (1) according to any of the preceding claims 1 through 10.
